(19) **Europäisches Patentamt / European Patent Office / Office européen des brevets**

(11) **EP 2 273 126 B1**

(12) **FASCICULE DE BREVET EUROPEEN**

(45) Date de publication et mention
de la délivrance du brevet:
**12.09.2012 Bulletin 2012/37**

(51) Int Cl.:
*F04D 15/00* (2006.01)      *F16K 5/02* (2006.01)
*F16K 39/06* (2006.01)

(21) Numéro de dépôt: **10305710.5**

(22) Date de dépôt: **01.07.2010**

(54) **Clapet anti-retour à recirculation automatique améliorée**

Rückschlagventil für automatische Rückführung

Check valve for automatic recirculation

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **06.07.2009 FR 0954646**

(43) Date de publication de la demande:
**12.01.2011 Bulletin 2011/02**

(73) Titulaire: **Klemm, Rainer
74210 Doussard (FR)**

(72) Inventeur: **Klemm, Rainer
74210 Doussard (FR)**

(74) Mandataire: **Domenego, Bertrand
Cabinet Lavoix
2, place d'Estienne d'Orves
75441 Paris Cedex 09 (FR)**

(56) Documents cités:
**GB-A- 1 183 581      GB-A- 191 210 498
US-A- 3 517 687      US-A- 5 779 222**

EP 2 273 126 B1

**Description**

L'invention a pour objet un clapet anti-retour à recirculation automatique, du type comportant :

- une soupape anti-retour disposée dans un canal principal du clapet et mobile entre des positions extrêmes respectivement de fermeture complète et d'ouverture maximale de la section de passage du canal principal ;
- une vanne de recirculation disposée dans un canal de recirculation constituant une dérivation du canal principal en amont de la soupape, la vanne comportant en amont un obturateur rotatif, et, en aval, un siège sur lequel l'obturateur est en appui, l'obturateur et le siège coopérant mutuellement pour définir la section de passage du canal de recirculation ;
- des moyens de transmission couplant la soupape anti-retour et l'obturateur de la vanne de manière à ce que la section de passage du canal de recirculation dépende de la section de passage du canal principal.

Dans ce type de clapet anti-retour à obturateur rotatif, l'ouverture ou la fermeture de la vanne est problématique. En effet, pour faire tourner l'obturateur, il est nécessaire de lui appliquer un couple important susceptible de vaincre les forces de frottement générées sur les surfaces d'étanchéité, correspondant aux surfaces sur lesquelles l'obturateur et le siège sont en contact.

L'invention a donc pour but de pallier ce problème.

Pour cela, l'invention a pour objet un clapet anti-retour à recirculation automatique du type précité, **caractérisé en ce que** la vanne comporte des moyens d'équilibrage de la pression adaptés pour que, parmi les surfaces aval de l'obturateur, c'est-à-dire des surfaces orientées vers le siège, au moins une surface ne participe pas à l'étanchéité de la vanne et est soumise à une pression de fluide sensiblement égale à la pression s'exerçant sur les surfaces amont de l'obturateur.

Suivant des modes particuliers de réalisation, le clapet comporte une ou plusieurs des caractéristiques suivantes, prise(s) isolément ou suivant toutes les combinaisons techniquement possibles :

- le siège et l'obturateur sont symétriques par révolution autour d'un axe commun, et l'obturateur est monté rotatif autour de cet axe, par rapport au siège ;
- le clapet l'obturateur et le siège délimitent entre eux une cavité, et les moyens d'équilibrage de la pression comportent un passage traversant la paroi de l'obturateur pour déboucher dans ladite cavité ;
- le siège présente des surfaces amont formant un tronc de cône, et l'obturateur comporte un évidement définissant les surfaces aval de l'obturateur qui formant un tronc de cône complémentaire de celui formé par les surfaces amont du siège, le fond de l'évidement et la petite base du siège délimitant ladite cavité ;
- l'axe du siège et de l'obturateur est disposé perpendiculairement et à l'écart de l'axe de la soupape ;
- les moyens de transmission comportent un levier monté pivotant par rapport aux corps du clapet, dont une extrémité coopère avec la soupape de manière à pouvoir être entraînée en basculement par la soupape et dont l'autre extrémité comporte un moyen d'actionnement apte à entraîner l'obturateur en rotation ;
- les moyens d'actionnement de l'obturateur comportent un segment denté monté à ladite autre extrémité de la levier, ledit segment denté engrainant une roue dentée prévue sur l'obturateur ;
- le segment denté et la roue dentée sont localisé dans un même plan perpendiculaire à l'axe de rotation de l'obturateur.

Le document GB 1 183 581 A décrit un clapet conforme au préambule de la revendication 1.

L'invention et ses avantages seront mieux compris à la lecture de la description qui va suivre, donnée uniquement à titre d'exemple, et faite en se référant aux dessins annexés sur lesquels :

- la Figure 1 est une représentation schématique d'un circuit hydraulique intégrant un clapet anti-retour à recirculation automatique ;
- la Figure 2 est une vue en coupe du clapet anti-retour de la Figure 1 ;
- la Figure 3 est une vue en coupe selon la ligne 3-3 de la Figure 2 du clapet anti-retour ;
- la Figure 4 est une vue en coupe de l'obturateur de la vanne représentée à la Figure 3 ; et
- la Figure 5 est une vue en coupe agrandie du siège de la vanne de la Figure 3.

Le principe général de fonctionnement d'un clapet anti-retour à recirculation automatique est connu.

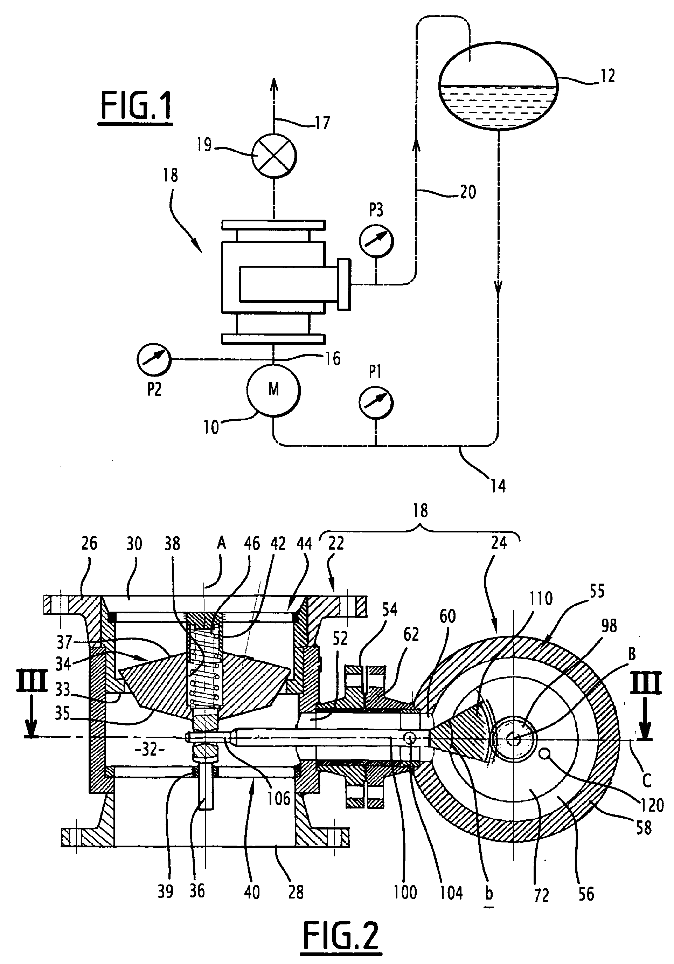

En se référant à la figure 1, une pompe 10, par exemple du type centrifuge, est alimentée, via une canalisation d'admission 14, par un liquide contenu dans un réservoir 12. En amont de la pompe 10, le liquide est à la pression $P_1$.

La pompe 10 refoule le liquide dans une canalisation de refoulement 16. En aval de la pompe 10, le liquide est à une pression $P_2$.

Il est connu d'installer, en aval de la pompe, le long de la canalisation de refoulement 16, un clapet anti-retour à recirculation automatique 18 et une vanne de réglage 19.

Un tel clapet 18 subdivise le débit entrant, correspondant au débit refoulé par la pompe 10, en un débit requis refoulé vers la portion aval 17 de la canalisation de refoulement 16, et en un débit recirculé refoulé dans le circuit d'alimentation via une canalisation de recirculation 20. Dans le mode de réalisation de la figure 1, la canalisation de recirculation 20 relie le clapet 18 au réservoir 12. La pression dans la canalisation de recirculation 20 est égale à une pression $P_3$, inférieure à la pression $P_2$, mais, a priori, différente de la pression $P_1$.

La vanne de réglage 19, en aval du clapet 18, a pour fonction de fixer le débit le long de la portion aval 17 de la canalisation de refoulement 16.

Pour maintenir la pompe 10 dans un domaine de fonctionnement adapté, caractérisé par un débit refoulé supérieur à un débit minimum seuil, et, par conséquent, la protéger contre un débit trop faible, le clapet 18 a pour fonction de faire recirculer un débit complémentaire du débit principal imposé par la vanne de réglage 19 de sorte que le débit refoulé par la pompe soit maintenu au-dessus du débit minimum seuil. Par exemple, le débit minimum seuil de la pompe 10 étant de 400 m$^3$/h, lorsque le débit principal est de 200 m$^3$/h, le débit recirculé est de 200 m$^3$/h pour maintenir le débit minimum admissible pour la pompe 10. Lorsque le débit principal imposé par la vanne de réglage 19 dépasse les 400 m$^3$/h la recirculation est fermée.

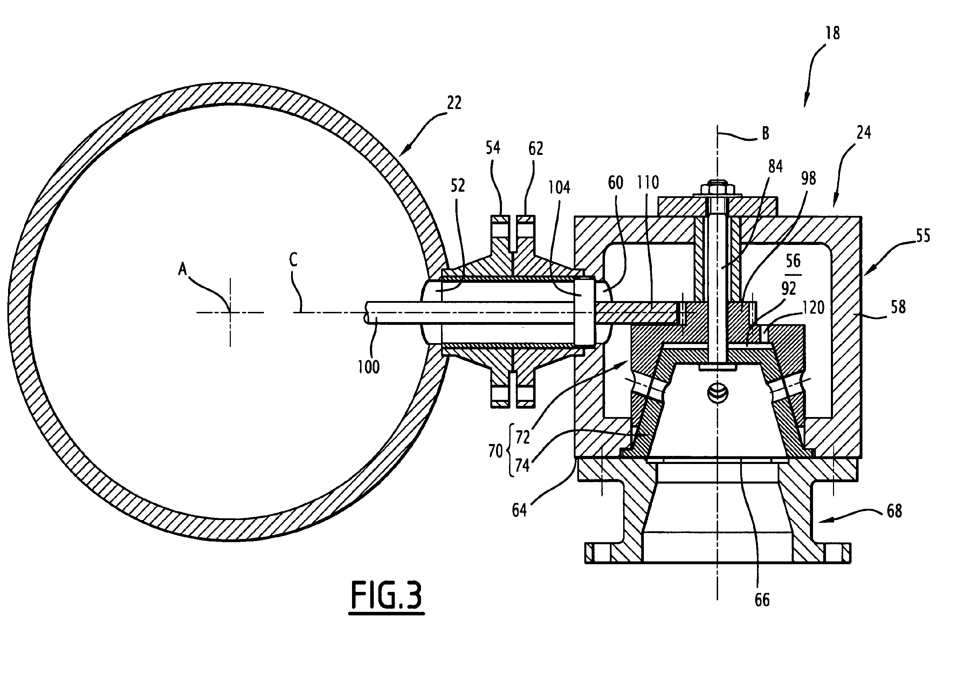

Comme représenté en coupe sur les figures 2 et 3, le clapet 18 comporte un premier dispositif 22 anti-retour et un second dispositif 24 de recirculation.

De manière connue en soi, le premier dispositif 22 comporte un premier corps 26 de forme tubulaire autour d'un axe A. Il délimite intérieurement, entre une ouverture amont 28 d'admission et une ouverture aval 30 de refoulement, un canal principal 32.

Le premier corps 26 renferme intérieurement une soupape anti-retour 34 coopérant avec un siège de soupape 33 solidaire du premier corps 26.

La soupape 34 est symétrique par révolution autour d'un axe qui, lorsque la soupape 34 est montée à l'intérieur du premier corps 26, coïncide avec l'axe A.

Du côté de sa face amont 35, la soupape 34 comporte une tige 36 s'étendant axialement au-delà de la soupape 34. Du côté de sa face aval 37, la soupape 34 comporte un alésage 38 s'étendant axialement.

La soupape 34 est montée en insérant l'extrémité libre de la tige 36 dans un orifice axial 39 d'un dispositif amont 40 de centrage, et en logeant, à l'intérieur de l'alésage 38, une tige creuse 42 d'un dispositif aval 44 de centrage. Les dispositifs de centrage amont et aval sont solidaires du premier corps 26.

Un ressort 46 est logé à l'intérieur de l'alésage 38 et de la tige creuse 42. Il prend appui d'une part sur le fond de l'alésage 38 et d'autre part sur le fond de la tige creuse 42. Le ressort 46 travaille en compression pour repousser la soupape 34 de l'aval vers l'amont, contre le siège 33.

La soupape 34 est montée de manière à être mobile en translation le long de l'axe A entre deux positions extrêmes :

- la position extrême de la soupape correspondant à la fermeture complète de la section de passage du canal principal 32 est définie par la mise en appui de la face amont 35 de la soupape 34 contre le siège 33 ;
- la position d'ouverture maximale de la section de passage du canal principal 32 est définie par la mise en butée du fond de l'alésage 38 de la soupape 34 sur la tige creuse 42.

Le ressort 46 a pour fonction d'appliquer la soupape 34 contre le siège 33 et de s'opposer au déplacement de la soupape 34.

La soupape 34 se soulève et se déplace vers l'aval, le long de l'axe A, lorsque la différence entre les pressions s'exerçant sur la face amont 35 et sur la face aval 37 est supérieure à une différence seuil prédéterminée, par exemple entre 0,5 et 1 bar. Dès que la dépression en aval de la soupape 34 n'est plus suffisante, la soupape revient en appui sur son siège, obturant le canal principal 32 et évitant un retour de liquide de l'aval vers l'amont.

En amont de la soupape 34, la paroi latérale du premier corps 26 comporte un orifice de dérivation 52.

Le premier dispositif 22 comporte, fixé extérieurement sur le premier corps 26, un premier flasque de fixation 54 tubulaire, à l'intérieur duquel débouche l'orifice de dérivation 52.

Le premier flasque de fixation 54 permet de solidariser le second dispositif 24 de recirculation sur le premier dispositif 22 anti-retour.

Le second dispositif 24 de recirculation va maintenant être décrit.

Le second dispositif 24 de recirculation comporte un second corps 55 formant un carter cylindrique d'axe B délimitant intérieurement une chambre 56.

La paroi latérale 58 du second corps 55 comporte un orifice d'entrée 60.

Le second dispositif 24 comporte, fixé extérieurement sur le second corps 55, un second flasque de fixation 62 tubulaire, à l'intérieur duquel débouche l'orifice d'entrée 60. Le second flasque de fixation 62 est adapté pour coopérer avec le premier flasque de fixation 54 de manière à fixer les premier et second dispositifs entre eux et à les connecter fluidiquement. Dans le mode de réalisation des figures, les axes des orifices de dérivation 52 et d'entrée 60 coïncident selon un axe C, et le second corps 55 est monté sur le premier de manière à ce que son axe B soit perpendiculaire et non concourrant à l'axe A du premier corps.

La paroi d'extrémité aval 64 du second corps 55 comporte un orifice traversant constituant un orifice de sortie 66 du second corps 55, destiné à être connecté à la canalisation de recirculation 20. Pour ce faire, la paroi 64 porte extérieurement une bride de fixation 68 adaptée.

Ainsi, le clapet 18 comporte un canal de recirculation s'étendant entre l'orifice de dérivation 52 et l'orifice de sortie 66, à travers les flasques de fixation 54 et 62 des premier et second corps, et la chambre 56 du second corps.

Le second corps 55 comporte intérieurement une vanne 70 permettant de modifier la section de passage du canal de recirculation. La vanne 70 comporte un obturateur 72 et un siège 74.

L'obturateur 72 et le siège 74 sont symétriques par révolution autour d'un axe coïncidant avec l'axe B. L'obturateur 72, de forme générale en cloche, coiffe le siège 74 de forme complémentaire.

L'obturateur 72 est actionnable en rotation autour de l'axe B par rapport au siège 74.

L'obturateur et le siège comportent des trous traversants dont l'alignement est modifié lors du déplacement de l'obturateur de manière à adapter la section de passage à travers la vanne 70.

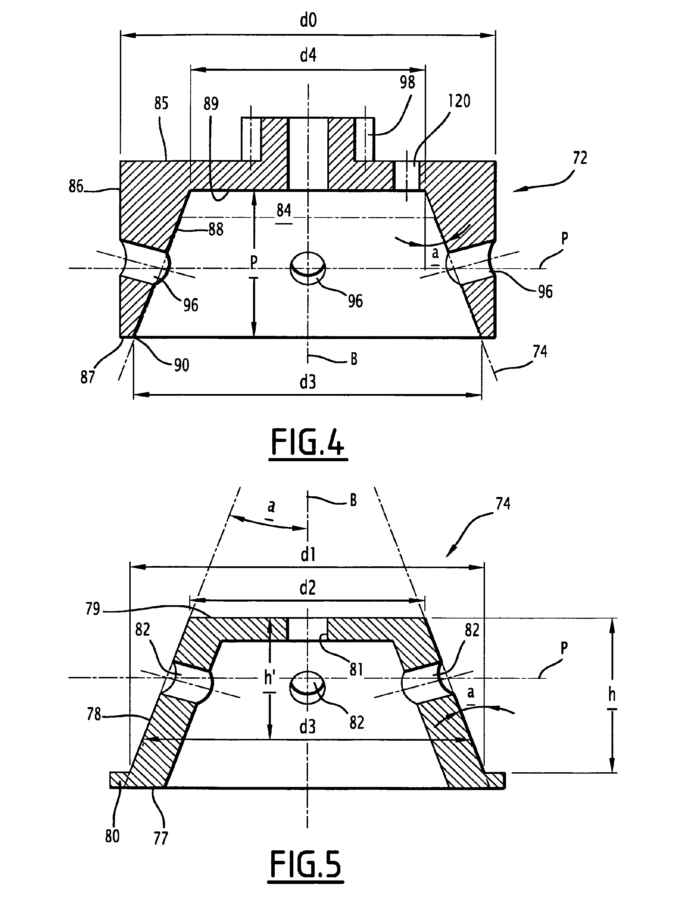

Dans le mode de réalisation représenté sur les figures 4 et 5, la paroi du siège 74 présente :

- des surfaces amont comportant une surface latérale tronconique 78 et une surface d'extrémité ou petite base 79. La surface latérale tronconique s'étend sur une hauteur $h$ entre une section transversale présentant un premier diamètre extérieur $d1$ et une section transversale présentant un second diamètre extérieur $d2$, inférieur au premier diamètre $d1$, de sorte que la surface latérale tronconique 78 fait un angle $a$ par rapport à l'axe B. La section transversale de diamètre d2 formant la petite base du tronc de cône correspond à la surface d'extrémité 79.

La surface d'extrémité 79 comporte un alésage axial 81 permettant le montage d'un axe 84 autour duquel l'obturateur 72 est monté libre en rotation.

La base 77 du siège 74 présente une collerette 80 permettant le montage du siège sur un épaulement adapté ménagé sur le pourtour de l'orifice de sortie 66.

La paroi du siège 74 est munie d'une pluralité de trous 82 traversant qui débouchent, sensiblement à angle droit, sur la surface latérale tronconique 78. Ils sont disposés de manière à ce que leurs centres, sur la surface latérale tronconique 78, soient dans un plan P transversal à l'axe B. Dans le mode de réalisation représenté, le siège 74 comporte quatre trous 82 qui, en projection dans le plan P, sont localisés à 90° les uns des autres.

L'obturateur 72 de la vanne 70 va maintenant être décrit.

L'obturateur 72, de forme extérieure cylindrique, présente intérieurement un évidement 84 de forme tronconique, adapté pour recevoir par emboîtement le siège 74.

Plus précisément, la paroi de l'obturateur 72 est conformée de manière à présenter :

- des surfaces amont qui définissent un cylindre d'axe B et de diamètre $d0$, et comportent une surface d'extrémité supérieure 85, une surface latérale 86, et une surface d'extrémité inférieure 87 annulaire ; et,
- des surfaces aval qui définissent un tronc de cône d'axe B et comportent une surface latérale tronconique 88 et une surface d'extrémité formant le fond 89 de l'évidement 84.

La surface latérale tronconique 88 s'étend sur une profondeur $p$ entre une section transversale de diamètre intérieur $d3$ et une section transversale de diamètre intérieur $d4$, inférieur au diamètre $d3$. La surface latérale tronconique 88 fait un angle $a$ avec l'axe B. Cet angle est identique à celui du siège 74. La section transversale de diamètre $d4$ correspondant à la petite base du tronc de cône coïncide avec le fond 89.

Le diamètre $d3$ est inférieur au diamètres $d1$ du siège, mais supérieur au diamètre $d2$, et le diamètre $d4$ est inférieur au diamètre $d2$ du siège, de manière à pouvoir emboîter le siège et l'obturateur l'un sur l'autre.

La profondeur $p$ de l'évidement 84 est adaptée de manière à être supérieure à la distance $h'$, considérée sur le siège 74, entre la section de la surface latérale tronconique 78 de diamètre $d3$ et la surface d'extrémité 79. Ainsi, lorsque l'obturateur est emboîté sur le siège, une cavité 92 (figure 3) est ménagée entre le fond 89 de l'obturateur et la surface d'extrémité 79 du siège. En revanche, les surfaces latérales tronconiques 88 et 78, respectivement de l'obturateur et du siège, en appui mutuel, définissent les surfaces d'étanchéité de la vanne 70.

La paroi de l'obturateur 72 comporte une pluralité de trous traversants 96 qui débouchent, sensiblement à angle droit, sur la surface latérale tronconique 88, de manière à ce que leurs centres soient situés dans un plan transversal à l'axe B, coïncidant avec le plan P lorsque l'obturateur coiffe le siège. L'obturateur comporte quatre trous 96, qui sont alignés avec les trous 82 du siège 74, pour une position angulaire précise de l'obturateur par rapport au siège.

La surface d'extrémité 85 comporte une roue 98 d'axe B pour l'actionnement en rotation de l'obturateur.

Pour contraindre la section de passage du canal de recirculation en fonction de la section de passage du canal principal, le clapet 18 comporte des moyens d'actionnement de l'ouverture de la vanne 70 en fonction de l'ouverture de la soupape 34.

Ces moyens d'actionnement comportent un levier 100 disposé de manière à s'étendre à travers les orifices de dérivation 52 et d'entrée 60, sensiblement selon l'axe C des flasques tubulaires 54 et 62.

Le levier 100 est relié au second corps 24 par une première liaison pivot dont l'axe 104 est perpendiculaire à l'axe A de sorte que la levier se déplace dans un plan contenant l'axe A.

Une première extrémité 106 du levier 100 est couplée à la tige 36 de la soupape anti-retour 34 par une seconde liaison autorisant à la fois un mouvement de glissement du point de contact entre l'extrémité 106 et la tige 36 et un basculement de la tige 100 par rapport à la tige 36 autour d'un axe parallèle à l'axe 104.

La seconde extrémité du levier 100 comporte un secteur 110. Le secteur 110, dont le centre coïncide avec un point de l'axe de rotation de la première liaison pivot, présente une ouverture angulaire b. Sa périphérie porte des dents aptes à coopérer avec les dents de la roue 98 de l'obturateur. Dans le mode de réalisation préférentiel, le segment 110 et la roue 98 sont situés dans un même plan qui correspond au plan de déplacement du levier 100.

Lorsque le canal principal est obturé, la soupape 34 repose sur son siège 33. Le levier 100 coïncide alors avec l'axe C. La position relative du secteur denté 110 et de la roue 98 de l'obturateur définit la position d'ouverture maximale de la vanne 70 dans laquelle les trous 96 de l'obturateur sont alignés avec les trous 82 du siège.

Lorsque la différence des pressions soulève la soupape 34 à l'écart de son siège 33, la portion d'extrémité 106 du levier 100 est déplacée sensiblement le long de l'axe A, entraînant un pivotement du levier 100 et la rotation du secteur denté 110. Celui-ci applique un couple sur l'obturateur apte à le faire tourner autour de l'axe B. Ce faisant, les trous 96 de l'obturateur et les trous 82 du siège sont désalignés et la section de passage du canal de recirculation diminue.

Le déplacement maximum de la soupape, les distances entre chacune des extrémités du levier et l'axe de pivotement de celui-ci, et le rapport des rayons du secteur denté et de la roue dentée sont déterminés de sorte qu'à la position d'obturation de la soupape corresponde l'alignement des trous de l'obturateur avec ceux du siège, c'est-à-dire l'ouverture de la vanne, et qu'à la position d'ouverture maximale de la soupape corresponde une distance entre un trou de l'obturateur et un trou du siège suffisante pour garantir l'étanchéité, c'est-à-dire la fermeture de la vanne.

La force de frottement qui s'oppose au déplacement en rotation de l'obturateur sur le siège dépend de la force d'appui de l'obturateur sur le siège.

Afin de limiter la force d'appui de l'obturateur sur le siège, la vanne 70 comporte des moyens permettant de mettre la cavité 92 en communication de fluide avec la chambre 56 de manière à ce que la pression de fluide qui s'exerce dans la cavité soit sensiblement égale à celle qui s'applique sur les surfaces amont de l'obturateur 72, en l'occurrence la pression $P_3$. Dans le mode de réalisation représenté sur la figures, ce moyen d'équilibrage des pressions est un passage 120 débouchant d'une part, sur le fond 89 et, d'autre part, sur la surface d'extrémité 85 de l'obturateur 72.

Dans ce qui suit, il va être montré que la force de pression résultante sur l'obturateur dépend, entre autres paramètres, de l'angle a.

Parmi les surfaces de l'obturateur orientées vers l'aval, c'est-à-dire en direction du siège, l'essentiel de la surface latérale tronconique 88 de l'obturateur vient en appui de la surface latérale tronconique 78 du siège. Ces surfaces en appui mutuel définissent les surfaces d'étanchéité de la vanne 70. Par conséquent, la pression de fluide qui s'exerce sur la surface latérale tronconique 88 est sensiblement nulle. La pression sur la surface tronconique entre les sections transversales de diamètre d2 et d4, surface tronconique délimitant latéralement la cavité 92, étant ici négligée, puisque la hauteur h' et la profondeur p sont proches, la cavité ayant une hauteur réduite.

Par ailleurs, grâce à la présence du passage 120, le fond 89 de l'évidement 84 subit une pression égale à la pression $P_2$. La force de pression résultante $F_{89}$

est donnée par : $F_{89} = P_2 \times \frac{\pi}{4} d_4^2$

Côté amont de l'obturateur, les forces de pression qui s'exercent sur la surface latérale 86 ne déforment pas l'obturateur. La surface latérale 86 reste cylindrique, et les forces de pression qui s'y appliquent ne présentent pas de résultante selon l'axe B. Par conséquent, les forces de pression qui s'exercent sur la surface latérale 86 ne participent pas à l'appui de l'obturateur sur le siège.

Seules les forces de pression qui s'exercent sur les surfaces d'extrémité 85 et 87 sont à considérer. Elles s'expriment de la manière suivante :

$$F_{85} = P_2 \times \frac{\pi}{4} d_0^2$$

$$F_{87} = P_2 \times \frac{\pi}{4}(d_0^2 - d_3^2)$$

La résultante F des forces de pression selon l'axe B sur l'obturateur 72 s'écrit : F = $F_{85}$ - $F_{89}$ - $F_{87}$
Soit :

$$F = P_2 \times \frac{\pi}{4}(d_3^2 - d_4^2)$$

Or,

$$tg(a) = \frac{d_3 - d_4}{2p}$$

D'où, finalement,

$$F = P_2 \times \frac{\pi}{4}((2p \times tg(a) + d_4)^2 - d_4^2)$$

Cette résultante dépend de la tangente de l'angle a, du diamètre d4 du fond 89, et de la profondeur p de l'évidement 84.

En conséquence, à une profondeur p donnée et un diamètre d4 donné, en sélectionnant un angle a particulier, il est possible d'adapter la force de frottement de l'obturateur sur le siège. Une valeur de l'angle a est choisie pour assurer un appui suffisant de manière à garantir l'étanchéité de la vanne 70, sans gêner l'actionnement en rotation de l'obturateur.

L'homme du métier comprendra que de nombreuses variantes de réalisation de la vanne et, en particulier, des moyens d'équilibrage de la pression sont envisageables sans s'écarter de la présente invention.

## Revendications

1. Clapet anti-retour à recirculation automatique (18), du type comportant :

   - une soupape (34) anti-retour disposée dans un canal principal du clapet et mobile entre des positions extrêmes respectivement de fermeture complète et d'ouverture maximale de la section de passage du canal principal ;
   - une vanne (70) de recirculation disposée dans un canal de recirculation constituant une dérivation du canal principal en amont de la soupape, la vanne comportant, en amont, un obturateur (72) rotatif, et, en aval, un siège (74), l'obturateur et le siège coopérant mutuellement pour définir la section de passage du canal de recirculation ;
   - des moyens de transmission couplant le mouvement de la soupape et celui de l'obturateur de manière à ce que la section de passage du canal de recirculation dépende de la section de passage du canal principal,

   **caractérisé en ce que** la vanne comporte des moyens d'équilibrage de la pression (120) adaptés pour que, parmi les surfaces aval (88, 89) de l'obturateur, c'est-à-dire des surfaces orientées vers le siège, au moins une surface (89) ne participe pas à l'étanchéité de la vanne et est soumise à une pression de fluide sensiblement égale à la pression s'exerçant sur les surfaces amont (87, 86, 85) de l'obturateur.

2. Clapet selon la revendication 1, **caractérisé en ce que** le siège (74) et l'obturateur (72) sont symétriques par révolution autour d'un axe (B) commun et **en ce que** l'obturateur est monté rotatif autour de cet axe, par rapport au siège.

3. Clapet selon la revendication 1 ou la revendication 2, **caractérisé en ce que** l'obturateur (72) et le siège (74) délimitent entre eux une cavité (92), et **en ce que** les moyens d'équilibrage de la pression comportent un passage (120) traversant la paroi de l'obturateur pour déboucher dans ladite cavité.

4. Clapet selon l'une quelconque des revendications 1 à 3, caractérisé en ce uqe l'obturateur (72) coiffe le siège (74) de forme complémentaire.

5. Clapet selon la revendication 4, **caractérisé en ce que** le siège (74) présente des surfaces amont (78, 79) formant un tronc de cône, et **en ce que** l'obturateur (72) comporte un évidement (84) définissant les surfaces aval de l'obturateur (88, 89) qui formant un tronc de cône complémentaire de celui formé par les surfaces amont du siège, le fond (89) de l'évidement et la petite base (79) du siège délimitant ladite cavité (92).

6. Clapet selon la revendication 5, **caractérisé en ce que** la sélection de la valeur d'au moins un paramètre parmi la tangente du demi-angle au sommet du tronc de cône, la profondeur de l'évidement et le diamètre du fond de l'évidement permet d'adapter la force de frottement de l'obturateur sur le siège.

7. Clapet selon l'une quelconque des revendications 2 à 6, **caractérisé en ce que** l'axe (B) du siège (74) et de l'obturateur (72) est disposé perpendiculairement et à l'écart de l'axe (A) de la soupape (34).

8. Clapet selon la revendication 7, **caractérisé en ce que** les moyens de transmission comportent un levier (100) monté pivotant par rapport aux corps (22, 24) du clapet (18), dont une extrémité (106) coopère avec la soupape (34) de manière à pouvoir être entraînée en basculement par la soupape (34) et dont l'autre extrémité comporte un moyen d'actionnement (110) apte à entraîner l'obturateur (72) en rotation.

9. Clapet selon la revendication 8, **caractérisé en ce que** les moyens d'actionnement de l'obturateur (72) comportent un segment denté (110) monté à ladite autre extrémité de la levier (100), ledit segment denté engrainant une roue dentée (98) prévue sur l'obturateur (72).

10. Clapet selon la revendication 9, **caractérisé en ce que** le segment denté (110) et la roue dentée (98) sont localisés dans un même plan, perpendiculaire à l'axe (B) de rotation de l'obturateur (72).

## Claims

1. Automatic recirculation non-return valve (18) of the type comprising:

   - a check valve (34) located in a maim duct of the non-return valve and movable between extreme positions of complete closure and maximum opening, respectively, of the flew cross-section of the main duct;

- a recirculation valve (70) located in a recirculation duct forming a branch of the main duct upstream of the check valve, the recirculation valve comprising, upstream, a rotary shutter (72) and, downstream, a seat (74), the shutter and the seat cooperating with each other to define the flow cross-section of the recirculation duct;

- transmission means coupling the movement of the check valve and that of the shutter in such a manner that the flow cross section of the recirculation duct depends on the flow cross-section of the main duct,

**characterised in that** the recirculation valve comprises pressure-balancing means (120) configured in such a manner that, of she downstream surfaces (88, 89) of the shutter, that is to say, surfaces oriented towards the seat, at least one surface (89) is not involved in the sealing of the recirculation valve and is subjected to a fluid pressure substantially equal to the pressure exerted on the upstream surfaces (87, 86, 85) of the shutter.

2. Valve according to claim 1, **characterised, in that** the seat (74) and the shutter (72) are rotationally symmetrical about a common axis (B), and **in that** the shutter is mounted to rotate about that axis, relative to the seat.

3. Valve according to claim 1 or claim 2, **characterised in that** the shutter (72) and the seat (74) between them delimit a cavity (92), and **in that** the pressure-balancing means comprise a passage (120) extending through the wall of the shutter to lead into the said cavity.

4. Valve according to any one of claims 1 to 3, **characterized in that** the shutter (72) covers the seat (74) having a complementary shape.

5. Valve according to claim 4, **characterised in that** the seat (74) has upstream surfaces (78, 79) forming a conic frustum, and **in that** the shutter (72) comprises a recess (84) defining the downstream surfaces of the shutter (88, 89) which form a conic frustum complementing that formed by the upstream surfaces of the seat, the base (89) of the recess and the small base (79) of the seat delimiting the said cavity (92).

6. Valve according to claim 5, **characterized in that** the selection of the value of at least one parameter among the tangent of the half conic frustrum angle the depth of the recess and the diameter of the base of the recess, allows the frictional force of the shutter on the seat to be adapted.

7. Valve according to any one of the claims 2 to 6, **characterised in that** the axis (B) of the seat (74) and of the shutter (72) is arranged perpendicularly to and at a distance from the axis (A) of the check valve (34).

8. Valve according to claim 7, **characterised in that** the transmission means comprise a lever (100) which is mounted to pivot relative to the bodies (22, 24) of the non-return valve (18) and one end (106) of which cooperates with the check valve (34) in such a manner that it can be caused to tilt by the check valve (34) and the other end of which comprises an activating means (110) suitable for driving the shutter (72) in rotation.

9. Valve according to claim 8, **characterised in that** the means for activating the shutter (72) comprise a toothed segment (1110) mounted at the said other end of the lever (100), the said toothed segment meshing with a toothed wheel (98) provided on the shutter (72).

10. Valve according to claim 9, **characterised in that** the toothed segment (110) and the toothed wheel (98) are located in the same plane perpendicular to the axis (B) of rotation of the shutter (72).

**Patentansprüche**

1. Rückschlagventil für automatische Rückführung (18), umfassend :

eine Rückschlagklappe (34), die in einem Hauptkanal des Ventils angeordnet ist und zwischen Extrempositionen von vollständigem Verschluss bzw. maximaler Öffnung des Durchlassabschnitts des Hauptkanals beweglich ist;
einen in einem Ruckführungskanal angeordneten Rückführungsschieber (70), der eine Anleitung des Hauptkanals stromaufwärts von der Klappe aufbaut, wobei der Schieber stromaufwärts eine Drehverschlussvorrichtung (72) und stromabwärts einen Sitz (74) umfasst, wobei die Verschlussvorrichtung und der Sitz gegenseitig zusammenwirken, um den Durchlassabschnitt des Rückführungskanals zu definieren;
- Übenragungsmittel, die die Bewegung der Klappe und diejenige der Verschlussvorrichtung koppeln, derart, dass der Durchlassabschnitt des Rückführungskanals von dem Durchlassabschnitt des Hauptkanals abhängt;

**dadurch gekennzeichnet, dass** der Schieber Druckausgleichsmittel (120) umfasst, die dazu ausgelegt sind, dass, von den stromabwärtigen Oberflächen (88, 89) der Verschlussvorrichtung d. h. den Oberflächen, die in Richtung des Sitzes orientiert sind, mindestens eine Oberfläche (89) nicht an der Dichtigkeit des Schiebers teilhat und einem Fluiddruck ausgesetzt ist, der im Wesentlichen gleich dem Druck ist, der auf die stromaufwärtigen Oberflächen (87, 86, 85) der Verschlussvorrichtung ausgeübt wird.

2. Rückschlagventil nach Anspruch 1, **dadurch gekennzeichnet, dass** der Sitz (74) und die Verschlussvorrichtung (72) rotationssymmetrisch um eine gemeinsame Achse (B) sind, und dadurch dass die Verschlussvorrichtung drehbar um diese Achse in Bezug auf den Sitz montiert ist.

3. Rückschlagventil nach Anspruch 1 oder 2, **dadurch gekennzeichnet, dass** die Verschlussvorriehtung (72) und der Sitz (74) zwischen sich einen Hohlraum (92) begrenzen und dadurch dass die Druckausgleichsmittel einen Durchlass (120) umfassen, der die Wand der Verschlussvorrichtung quert, um in den Hohlraum einzumünden.

4. Rückschlagventil nach einem der Ansprüche 1 bis 3, **dadurch gekennzeichnet, dass** die Verschlussvorrichtung (72) den Sitz (74) von komplementärer Form überdeckt.

5. Rückschlagventil nach Anspruch 4, **dadurch gekennzeichnet, dass** der Sitz (74) stromaufwärtige Oberflächen (78, 79) aufweist, die einen Kegelstumpf bilden, und dadurch, dass die Verschlussvorrichtung (72) eine Aussparung (84) umfasst, die die stromabwärtigen Oberflächen der Verschlussvorrichtung definieren, die einen Kegelstumpf bilden, der zu demjenigen komplementär ist, der von den stromaufwärtigen Oberflächen des Sitzes gebildet wird, wobei der Boden (89) der Aussparung und die kleine Basis (79) des Sitzes den Hohlraum (92) begrenzen.

6. Ventil nach Anspruch 5, **dadurch gekennzeichnet, dass** sich durch die Wahl des Wertes von mindestens einem Parameter aus der Tangente des Halbwinkels am Scheitelpunkt des Kegelstumpfes, der Tiefe der Aussparung und dem Durchmesser der Basis der Aussparung die Reibungskraft der Verschiussvorrichtung auf den Sitz anpassen lässt.

7. Ventil nach einem der Ansprüche 2 bis 6, **dadurch gekennzeichnet, dass** die Achse (B) des Sitzes (74) und der Verschlussvorrichtung (72) senkrecht angeordnet und von der Achse (A) der Klappe (34) beabstandet ist.

8. Ventil nach Anspruch 7, **dadurch gekennzeichnet, dass** die Übertragungsmittel einen Hebel (100) umfassen, der bezüglich der Hauptstücke (22, 24) des Ventils (18) schwenkbar montiert ist, wovon ein Ende (106) mit der Klappe (34) zusammenwirkt, derart, dass es durch die Klappe (34) in Kippung versetzt werden kann, und wovon das andere Ende ein Antriebsmittel (110) umfasst, das dazu ausgelegt ist, die Verschlussvorrichtung in Rotation zu versetzen.

9. Ventil nach Anspruch 8, **dadurch gekennzeichnet, dass** die Antriebsmittel der Verschlussvornchtung (72) einen gezählten Abschnitt (110) umfassen, der am anderen Ende des Hebels (100) befestigt ist, wobei der gezähnte Abschnitt in ein Zahnrad (98) eingreift, das auf der Verschlussvarriahtung (72) vorgesehen ist.

10. Ventil nach Anspruch 9, **dadurch gekennzeichnet, dass** der gezähnte Abschnitt (110) und das Zahnrad (98) in ein und derselben Ebene senkrecht zu der Rotationsachse (B) der Verschlussvorrichtung (72) liegen.

## FIG.1

## FIG.2

FIG.3

FIG.4

FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 1183581 A